(19) 

Europäisches
Patentamt
European
Patent Office
Office européen
des brevets

(11) **EP 4 495 627 A1**

(12) **EUROPEAN PATENT APPLICATION**
published in accordance with Art. 153(4) EPC

(43) Date of publication:
   **22.01.2025 Bulletin 2025/04**

(21) Application number: **22927592.0**

(22) Date of filing: **12.08.2022**

(51) International Patent Classification (IPC):
   **G01S 13/90** (2006.01)   **G01S 13/89** (2006.01)

(52) Cooperative Patent Classification (CPC):
   **G06V 10/764; G01S 13/42; G01S 13/867;**
   **G01S 13/87; G01S 13/887; G01S 13/89;**
   **G01S 13/90; G06V 20/52;** G01S 13/343;
   G06V 2201/05

(86) International application number:
   **PCT/JP2022/030739**

(87) International publication number:
   **WO 2023/176013 (21.09.2023 Gazette 2023/38)**

(84) Designated Contracting States:
   **AL AT BE BG CH CY CZ DE DK EE ES FI FR GB**
   **GR HR HU IE IS IT LI LT LU LV MC MK MT NL NO**
   **PL PT RO RS SE SI SK SM TR**
   Designated Extension States:
   **BA ME**
   Designated Validation States:
   **KH MA MD TN**

(30) Priority: **18.03.2022 JP 2022044128**

(71) Applicant: **Kabushiki Kaisha Toshiba, Inc.**
   **Tokyo 105-0023 (JP)**

(72) Inventor: **MORI, Hiroki**
   **Tokyo 105-0023 (JP)**

(74) Representative: **Hoffmann Eitle**
   **Patent- und Rechtsanwälte PartmbB**
   **Arabellastraße 30**
   **81925 München (DE)**

(54) **PROCESSING SYSTEM, PROCESSING METHOD, AND PROGRAM**

(57)   According to one embodiment, a processing system includes a concatenating unit configured to form a concatenated image by concatenating m images based on received signals acquired by two or more radars, and a determination unit configured to determine whether or not there is an object, based on the concatenated image.

FIG. 3

**Description**

Technical Field

Embodiments described herein relate generally to a processing system, a processing method, and a program for processing an image.

Background Art

There is a radar system that irradiates a walking person with an electromagnetic wave, receives the electromagnetic wave reflected by the person, and generates an image of the person. In this system, a large number of transmitting antennas and a large number of receiving antennas are arranged on both sides of a walking path of a person. A plurality of transmitting antennas and a plurality of receiving antennas are arranged on a straight line. The receiving antennas are arranged at equal intervals as a first interval. The transmitting antennas are arranged at equal intervals as a second interval that is an integral multiple of the first interval. The transmitting antennas transmit electromagnetic waves in a time division manner. An electromagnetic wave is transmitted from one transmitting antenna, and an electromagnetic wave reflected by a person is received by all receiving antennas, and thus one image is generated. Then, electromagnetic waves are sequentially transmitted from other transmitting antennas, and electromagnetic waves reflected by the person are received by all the receiving antennas, and thus images are sequentially generated. As a result, a plurality of images, the number of which is equal to the number of transmitting antennas, is generated. The images are superposed (or simply added to each other) to generate one image at a certain position.

Then, electromagnetic waves are sequentially transmitted from the transmitting antennas, electromagnetic waves are received by all the receiving antennas, a plurality of images are generated, and the images are superposed. In this manner, one image is generated at another position of a person who is walking. This is sequentially repeated to generate a large number of images of the person at a large number of different positions during walking. When a large number of images at a large number of different parts are superposed, one image based on the reflected wave of the entire circumference of the person is generated.

In this system, a high definition image can be obtained by increasing the number of antennas.

However, if the number of antennas increases, the cost increases, the size of the device increases, and it may be difficult to arrange the antennas on both sides of a passage or the like. Furthermore, in order to superpose images, it is necessary to align pixels of the respective images, and thus the processing time becomes longer by the alignment.

Citation List

Non-patent Literature

Non-patent Literature 1: Borja Gonzalez-Valdes et al., "Millimeter Wave Imaging Architecture for On-The-Move Whole Body Imaging", IEEE TRANSACTIONS ON ANTENNAS AND PROPAGATION, VOL. 64, NO. 6, JUNE 2016.

Brief description of drawings

FIG. 1 is a diagram for illustrating an outline of a processing system according to a first embodiment.
FIG. 2 is a diagram for illustrating an example of a virtual array antenna according to the first embodiment.
FIG. 3 is a block diagram for illustrating an example of the processing system according to the first embodiment.
FIG. 4 is a block diagram for illustrating an example of a radar module according to the first embodiment.
FIG. 5 is a diagram for illustrating an example of an electromagnetic wave transmitted from the radar module according to the first embodiment.
FIG. 6 is a diagram for illustrating an example of an operation of the radar module according to the first embodiment.
FIG. 7 is a diagram for illustrating an example of image generation by the image generation unit according to the first embodiment.
FIG. 8 is a diagram for explaining an example of a transmitting/receiving operation of the radar module according to the first embodiment.
FIG. 9 is a diagram for explaining an example of a transmitting/receiving operation of the radar module according to the first embodiment.
FIG. 10 is a diagram for illustrating an example of the concatenated image generated by the image concatenating unit according to the first embodiment.

FIG. 11 is a diagram for illustrating an example of the concatenated images generated by the image concatenating unit according to the first embodiment.

FIG. 12 is a diagram for illustrating an example of processing of the image concatenating unit according to the first embodiment.

FIG. 13 is a diagram for illustrating another example of processing of the image concatenating unit according to the first embodiment.

FIG. 14 is a diagram for illustrating a still another example of processing of the image concatenating unit according to the first embodiment.

FIG. 15 is a diagram for illustrating an example a transmitting/receiving operation according to the first embodiment.

FIG. 16 is a diagram for illustrating an example of the concatenated images according to the first embodiment.

FIG. 17 is a diagram for illustrating another example a transmitting/receiving operation according to the first embodiment.

FIG. 18 is a diagram for illustrating another example of the concatenated images according to the first embodiment.

FIG. 19 is a diagram for illustrating a still another example a transmitting/receiving operation according to the first embodiment.

FIG. 20 is a diagram for illustrating a still another example of the concatenated images according to the first embodiment.

FIG. 21 is a diagram for illustrating an example of the arrangement of the radar modules according to the first embodiment.

FIG. 22 is a diagram for illustrating an outline of a processing system according to a second embodiment.

FIG. 23 is a diagram for illustrating an example of the concatenated images according to the second embodiment.

FIG. 24 is a diagram for illustrating an example of the concatenated image according to the second embodiment.

Description of Embodiments

Various embodiments will be described hereinafter with reference to the accompanying drawings. The disclosure is merely an example and is not limited by contents described in the embodiments described below. Modification which is easily conceivable by a person of ordinary skill in the art comes within the scope of the disclosure as a matter of course. In order to make the description clearer, the sizes, shapes, and the like of the respective parts may be changed and illustrated schematically in the drawings as compared with those in an accurate representation. Constituent elements corresponding to each other in a plurality of drawings are denoted by like reference numerals and their detailed descriptions may be omitted unless necessary.

In general, according to one embodiment, a processing system includes a concatenating unit configured to form a concatenated image by concatenating m images based on received signals acquired by two or more radars, and a determination unit configured to determine whether or not there is an object, based on the concatenated image. "m" is an integer equal to or more than 2.

First Embodiment

An application example of a processing system according to an embodiment is a security system. The processing system is installed, for example, in a facility such as an airport, a station, an airport, a shopping mall, a concert hall, or an exhibition hall. The processing system determines whether a person who uses the facility possesses a dangerous article. The person is irradiated with an electromagnetic wave, and an electromagnetic wave reflected by the person is received. An image is generated based on a received signal. It is possible to determine whether there is a dangerous article, based on this image.

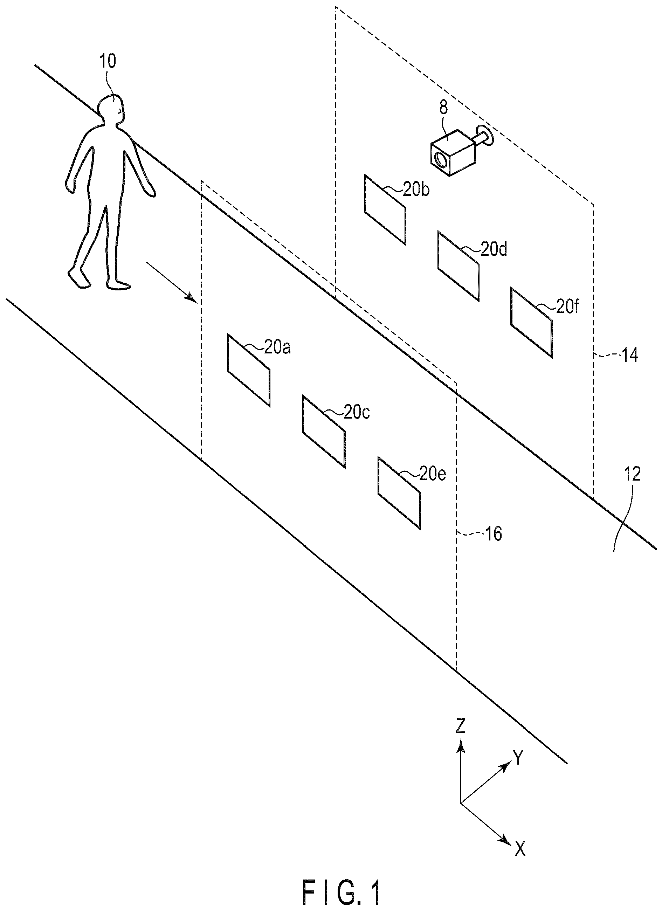

FIG. 1 is a diagram for illustrating an outline of a processing system according to a first embodiment. In this specification, an embodiment in which a person who is walking is irradiated with an electromagnetic wave will be described. But in other embodiments, a stationary person may be irradiated with an electromagnetic wave. The person may be stationary.

Radar modules 20a, 20c, and 20e are arranged on one side wall 16 of a passage 12 on which a pedestrian 10 walks. Radar modules 20b, 20d, and 20f are arranged on the other side wall 14 of the passage 12. The side wall 16 and the side wall 14 are flat surfaces parallel to each other. The longitudinal direction of the passage 12 is called an X-direction. The width direction of the passage 12 is called a Y-direction. The height direction of the side walls 14 and 16 is called a Z-direction.

It is not essential that the radar modules 20a to 20e are arranged on both side walls. At least two radar modules, for example, 20a and 20c may be arranged only on one side wall. The number of radar modules arranged on one side wall is not limited to three. In a case where the radar modules are arranged on both side walls, at least one radar module, for example, 20a and 20b may be arranged on each side wall.

In addition, the place on which the radar modules 20a to 20f are arranged is not limited to the side wall. The radar modules 20a to 20f may be arranged on, for example, a ceiling, a floor surface, a gate, or the like of a facility. Furthermore, the radar modules 20a to 20f may be arranged not on a fixed object but on a movable panel or the like. The movable panel may be installed around a person.

A camera 8 is attached to at least one of the side walls 14 and 16. The camera 8 captures an image of the pedestrian 10 on the passage 12. The position of the pedestrian 10 is determined based on the captured image of the camera 8. Instead of the camera 18, a sensor capable of detecting the pedestrian 10 on the passage 12 may be used. Alternatively, the position of the pedestrian 10 may be determined by the radar modules 20a to 20f without providing the camera 8.

The radar modules 20a, 20c, and 20e are one-dimensionally arranged on a straight line along a traveling direction of the pedestrian 10, that is, the X-direction. The radar modules 20b, 20d, and 20f are one-dimensionally arranged on a straight line along the X-direction. The positions of the radar modules 20a, 20c, and 20e in the height direction, that is, the Z-direction are the same as the positions of the radar modules 20b, 20d, and 20f in the Z-direction.

The position of the radar module 20a in the X-direction is the same as the position of the radar module 20b in the X-direction. The position of the radar module 20c in the X-direction is the same as the position of the radar module 20d in the X-direction. The position of the radar module 20e in the X-direction is the same as the position of the radar module 20f in the X-direction.

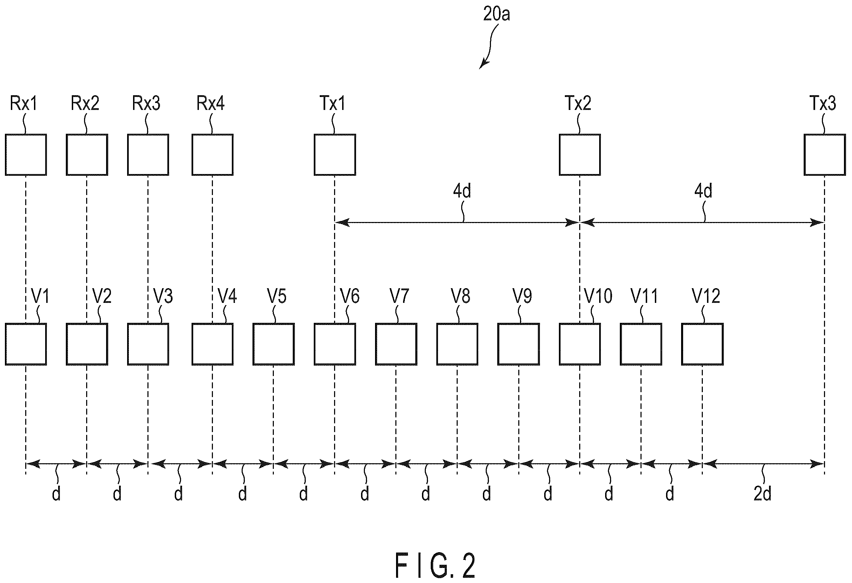

FIG. 2 is a diagram for illustrating an example of a virtual array antenna formed by the radar modules 20a to 20f used in the processing system according to the first embodiment. The radar modules 20a to 20f all have the same configuration. As an example, the radar module 20a will be described. The description of the radar module 20a is also applied to other radar modules 20b to 20f.

The radar module 20a includes three transmitting antennas Tx1, Tx2, and Tx3 arranged on a straight line along the X-direction, and four receiving antennas Rx1, Rx2, Rx3, and Rx4. The four receiving antennas Rx1 to Rx4 are arranged at equal intervals of an interval d. d is a half wavelength. The three transmitting antennas Tx1 to Tx3 are arranged at equal intervals of an interval 4d. An interval between the receiving antenna Rx4 and the transmitting antenna Tx1 is 2d. Examples of the receiving antennas Rx1 to Rx4 and the transmitting antennas Tx1 to Tx3 are microstrip antennas (also called patch antennas).

Note that the four receiving antennas Rx1 to Rx4 may be arranged at equal intervals of an interval 4d, and the three transmitting antennas Tx1 to Tx3 may be arranged at equal intervals of an interval d.

Furthermore, the antenna configuration, the number of antennas, or the antenna arrangement in the above description and the following description are merely examples. Other antenna configurations, other numbers of antennas, or other antenna arrangements may be used. For example, the transmitting antennas Tx1 to Tx3 and the receiving antennas Rx1 to Rx4 may be one-dimensionally arranged in the Z-direction, or may be two-dimensionally arranged in the X-Z direction.

The receiving antennas Rx1 to Rx4 receive the electromagnetic waves transmitted from the transmitting antennas Tx1 to Tx3, and generate received signals of the electromagnetic waves from the three transmitting antennas Tx1 to Tx3 to form a virtual array antenna (also called a MIMO (Multi Input Multi Output) array antenna). The virtual array antenna includes virtual antennas V1 to V12 arranged at equal intervals d on a straight line along the X-direction. By using the MIMO array antenna, it is possible to increase the number of antennas in the X-direction, also to increase an aperture length, and to improve the angular resolution.

The radar module 20a may include a plurality of transmitting antennas and a plurality of receiving antennas arranged two-dimensionally in the X-direction and the Y-direction.

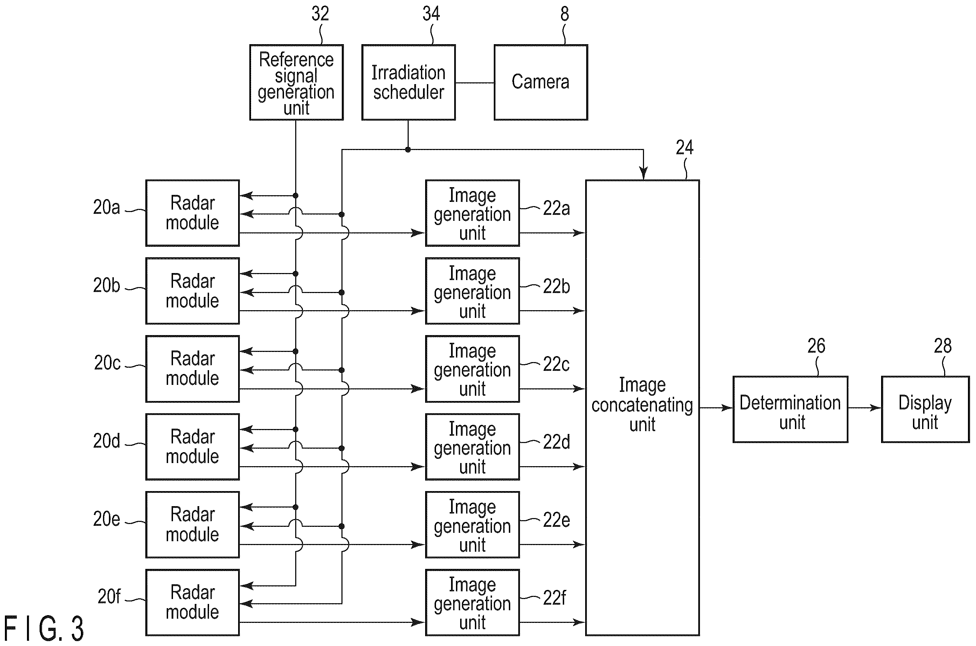

FIG. 3 is a block diagram for illustrating an example of an electrical configuration of the processing system according to the first embodiment. The radar modules 20a, 20b, 20c, 20d, 20e, and 20f are connected to image generation units 22a, 22b, 22c, 22d, 22e, and 22f, respectively. Each of the image generation units 22a to 22f generates an image of the pedestrian 10 based on the received signals of the radar modules 20a to 20f. A reference signal generation unit 32 and an irradiation scheduler 34 are connected to the radar modules 20a to 20f. The reference signal generation unit 32 supplies a reference signal for synchronizing transmitting/receiving operation of the radar modules 20a to 20f.

The irradiation scheduler 34 supplies a timing signal for controlling irradiation timings of an electromagnetic wave of the radar modules 20a to 20f to the radar modules 20a to 20f. The camera 8 is connected to the irradiation scheduler 34. Based on the captured image of the camera 8, the irradiation scheduler 34 detects that the pedestrian 10 has entered an inspection area by the radar modules 20a to 20f or has left the inspection area. The inspection area is an area where the radar modules 20a to 20f can receive a reflected wave of an electromagnetic wave by the pedestrian 10, which has been transmitted by the radar modules 20a to 20f. The irradiation scheduler 34 may detect the position and the walking speed of the pedestrian 10 based on the captured image of the camera 8. The irradiation scheduler 34 supplies a timing signal for controlling the irradiation timings of the electromagnetic wave of the radar modules 20a to 20f to the radar modules 20a to 20f based on the detected timing.

The image generation units 22a to 22f are connected to an image concatenating unit 24. The image concatenating unit 24 generates one image by concatenating a plurality of images generated by the image generation units 22a to 22f. The image concatenating unit 24 arranges the images generated by the image generation units 22a to 22f in different regions of one image. The image concatenating unit 24 is connected to a determination unit 26.

The determination unit 26 determines whether or not there is a predetermined object, based on the one image generated by the image concatenating unit 24. The predetermined object is a dangerous article that is not permitted to be possessed in this area. The dangerous article is metal such as a handgun or a knife, or powder such as an explosive. The predetermined object may include powder such as narcotics or an illegal article such as a bar.

The determination unit 26 is formed, for example, by a convolutional neural network. The convolutional neural network learns a determination result of possession of a dangerous article by using a large number of pieces of image data as teacher data. When the image of the pedestrian 10 is input to the determination unit 26, the determination unit 26 outputs a determination result as to whether or not the person in the image possesses a dangerous article. The convolutional neural network may be learned to determine not only whether or not the person possesses a dangerous article but also whether or not the person possesses each type of the dangerous article.

The determination unit 26 is connected to a display device 28. The display device 28 displays the determination result by the determination unit 26 and generates an alarm sound. A monitoring person can take necessary countermeasures by looking at the determination result or listening to the alarm sound.

The image generation units 22a to 22f, the image concatenating unit 24, and the determination unit 26 may be formed by hardware, or may be formed by a computer that functions as the image generation units 22a to 22f, the image concatenating unit 24, and the determination unit 26 by executing software.

The components related to the processing of the processing system according to the embodiment, that is, the image generation units 22a to 22f, the image concatenating unit 24, and the determination unit 26 may be formed by a cloud system.

The radar modules 20a to 20f have a radar function of a linear frequency modulated continuous wave (L-FMCW) type in which the frequency of an electromagnetic wave linearly increases with the lapse of time.

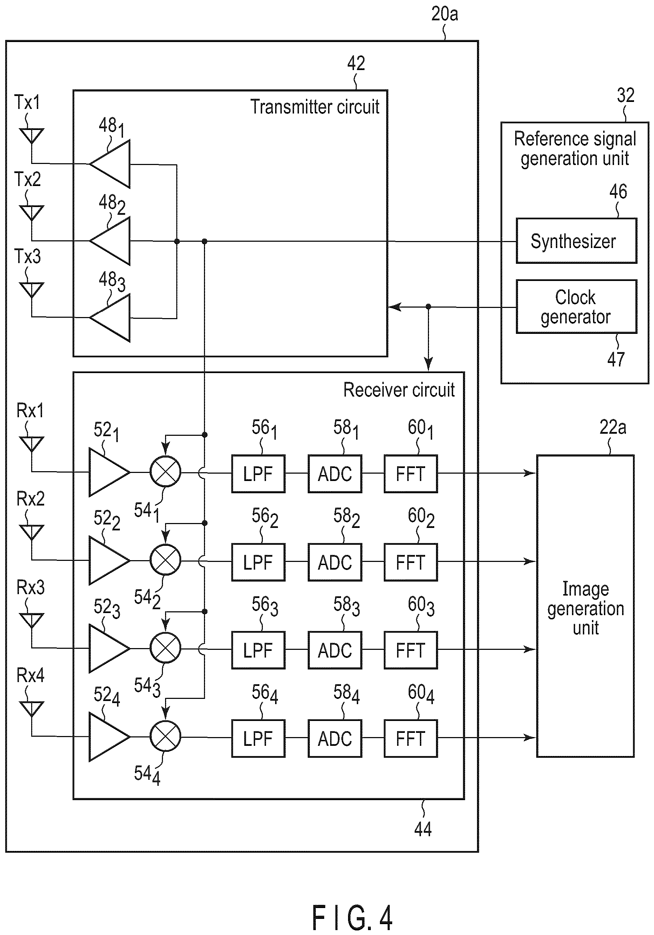

FIG. 4 is a block diagram for illustrating an example of an electrical configuration of the radar modules 20a to 20f (for example, the radar module 20a) and the reference signal generation unit 32 according to the first embodiment.

The reference signal generation unit 32 includes a synthesizer 46 and a clock generator 47. The radar modules 20a to 20f have a radar function of a linear frequency modulated continuous wave (L-FMCW) type in which the frequency of an electromagnetic wave linearly increases with the lapse of time. The synthesizer 46 generates an L-FMCW signal (called a chirp signal below).

The radar module 20a includes the transmitting antennas Tx1 to Tx3, a transmitting circuit 42, the receiving antennas Rx1 to Rx4, and a receiving circuit 44.

The transmitting circuit 42 includes amplifiers $48_1$, $48_2$, and $48_3$. The chirp signal generated by the synthesizer 46 is supplied to the amplifiers $48_1$, $48_2$, and $48_3$. The amplifiers $48_1$, $48_2$, and $48_3$ are connected to the transmitting antennas Tx1, Tx2, and Tx3, respectively.

The receiving circuit 44 includes amplifiers $52_1$, $52_2$, $52_3$, and $52_4$, mixers $54_1$, $54_2$, $54_3$, and $54_4$, lowpass filters (LPF) $56_1$, $56_2$, $56_3$, and $56_4$, A/D converters (ADC) $58_1$, $58_2$, $58_3$, and $58_4$, and fast Fourier transform circuits (FFT) $60_1$, $60_2$, $60_3$, and $60_4$.

The receiving antennas Rx1, Rx2, Rx3, and Rx4 are connected to the amplifiers $52_1$, $52_2$, $52_3$, and $52_4$, respectively. The output signals of the amplifiers $52_1$, $52_2$, $52_3$, and $52_4$ are input to first input terminals of the mixers $54_1$, $54_2$, $54_3$, and $54_4$, respectively. The chirp signal generated by the synthesizer 46 is input to second input terminals of the mixers $54_1$, $54_2$, $54_3$, and $54_4$. Each of the mixers $54_1$, $54_2$, $54_3$, and $54_4$ multiplies the received signal by the chirp signal to generate an intermediate frequency (IF) signal.

The IF signals output from the mixers $54_1$, $54_2$, $54_3$, and $54_4$ are supplied to the FFTs $60_1$, $60_2$, $60_3$, and $60_4$ via the LPFs $56_1$, $56_2$, $56_3$, and $56_4$ and the ADCs $58_1$, $58_2$, $58_3$, and $58_4$, respectively. Each of the FFTs $60_1$, $60_2$, $60_3$, and $60_4$ detects the intensity of an electromagnetic wave received by each of the receiving antennas Rx1, Rx2, Rx3, and Rx4.

The clock signal generated by the clock generator 47 is supplied to the transmission circuits 42 and the reception circuits 44 of all the radar modules 20a to 20f. Operation timings of the transmission circuits 42 and the reception circuits 44 of all the radar modules 20a to 20f are controlled by the clock signal. Therefore, the transmission circuits 42 and the reception circuits 44 of all the radar modules 20a to 20f execute a transmission operation and a reception operation in synchronization.

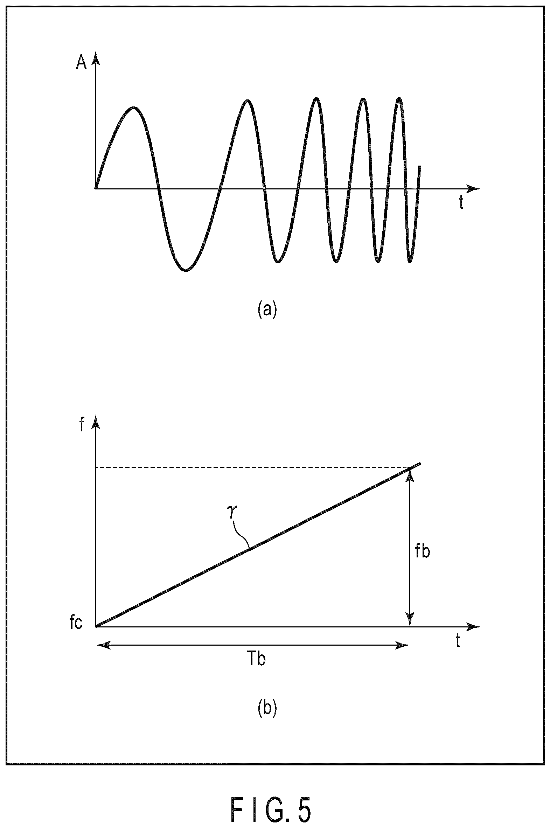

FIG. 5 illustrates an example of an electromagnetic wave transmitted from the radar modules 20a to 20f according to the first embodiment. FIG. 5 (a) illustrates the chirp signal representing an amplitude "A" as a function of time t. FIG. 5 (b) illustrates the chirp signal representing a frequency f as a function of time t. As illustrated in FIG. 5 (b), the chirp signal is represented by a center frequency fc, a modulation bandwidth fb, and a signal time width Tb. The slope of the chirp signal is called a frequency change rate (chirp rate) $\gamma$.

A transmitted signal St(t) of the chirp signal is represented by Equation 1.

$$St(t) = \cos[2\pi(fc \times t + \gamma t^2/2)] \qquad \text{Equation 1}$$

The chirp rate $\gamma$ is represented by Equation 2.

$$\gamma = fb/Tb \qquad \text{Equation 2}$$

A reflected wave from an object away from the radar modules 20a to 20f by a distance R is observed with a delay of $\Delta t = 2R/c$ from a transmitting timing. A letter "c" indicates the speed of light. The received signal Sr(t) is represented by Equation 3 if the reflection intensity of the object is set as "a".

$$Sr(t) = a \times \cos[2\pi fc(t - \Delta t) + \pi\gamma(t - \Delta t)^2]$$
$$\text{Equation 3}$$

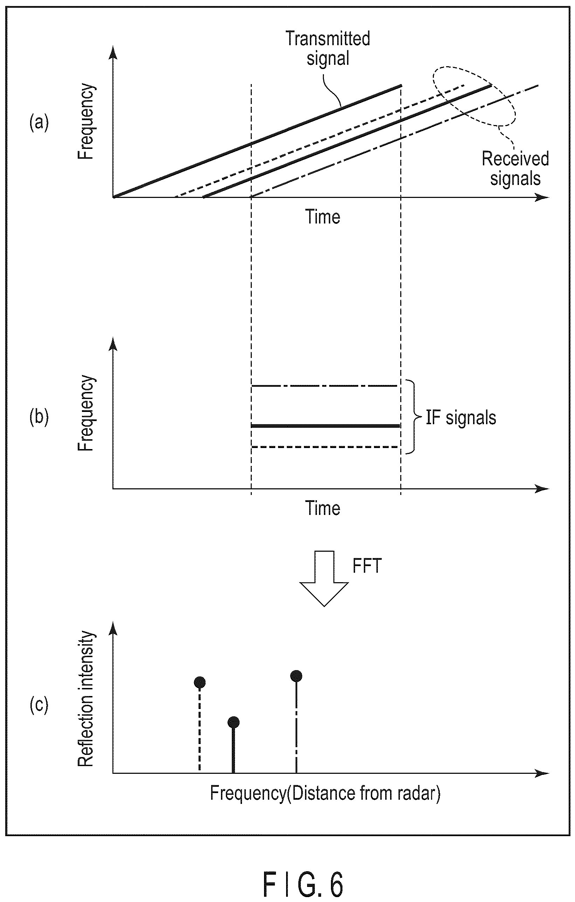

FIG. 6 is a diagram for explaining an example of an operation of the radar module according to the first embodiment. FIG. 6 illustrates the detection principle in a case where there are three objects, for example. FIG. 6 (a) illustrates a relationship between a transmitted signal and time, and a relationship between a received signal and time. The frequency of the transmitted signal changes linearly with time. The received signal is delayed by $\Delta t$ with respect to the transmitted signal. In a case where there are a plurality of objects, the reflected wave from the nearest object indicated by a broken line is received earliest, and the reflected wave from the farthest object indicated by a one-dot chain line is received latest.

As illustrated in FIG. 4, the received signal is multiplied by the chirp signal by the mixer $54_1$ to $54_4$ to become an IF signal z(t). The IF signal z(t) is represented by Equation 4.

$$z(t) = a \times \cos(2\pi\Delta t\gamma t) \qquad \text{Equation 4}$$

FIG. 6 (b) illustrates the relation between the frequency of the IF signal and time. In an ideal environment with no noise or the like, the frequency is constant for each reflected wave. The frequency of the IF signal of the reflected wave from the nearest object indicated by a broken line is the lowest, and the frequency of the IF signal of the reflected wave from the farthest object indicated by a one-dot chain line is the highest.

It is possible to calculate the reflection intensity in a frequency domain by performing FFT of the IF signal z(t) in a time domain, which is represented by Equation 4, in the FFTs $60_1$ to $60_4$. Thus, the amplitude at each point in the frequency domain, which is the result of the FFT of the IF signal, corresponds to the reflection intensity for each of distances from the radar modules 20a to 20f. The frequency $f_{if}$ and the distance R have the relationship of Equation 5.

$$f_{if} = \Delta t\gamma = 2R\gamma/c \qquad \text{Equation 5}$$

FIG. 6 (c) illustrates the relation between the reflection intensity obtained by performing FFT on the IF signal in the time domain, and the frequency. As described above, it is possible to obtain the reflection intensity for each of distances from the radar modules 20a to 20f by obtaining the amplitude of the frequency domain signal of the IF signal.

As the electromagnetic wave used in the embodiment, an electromagnetic wave having a wavelength of 1 mm to 30 mm may be used. The electromagnetic wave having a wavelength of 1 mm to 10 mm is called a millimeter wave. The electromagnetic wave having a wavelength of 10 mm to 100 mm is called a microwave. Further, an electromagnetic wave having a wavelength called a terahertz wave of 100 micrometers to 1 millimeter may be used.

The electromagnetic wave is reflected by the skin of the pedestrian 10. The electromagnetic wave is also reflected by metal such as a handgun or a knife. The reflectance of metal is higher than the reflectance of skin. The intensity of the reflected wave of metal is higher than the intensity of the reflected wave of skin. The electromagnetic wave is absorbed by a powder such as an explosive. The reflectance of the powder is lower than the reflectance of the skin. The intensity of the reflected wave is determined by the type of substance at a point where the electromagnetic wave is reflected, such as skin, metal, or powder. Therefore, it is possible to detect the type of substance at a reflection point from the intensity of the reflected wave.

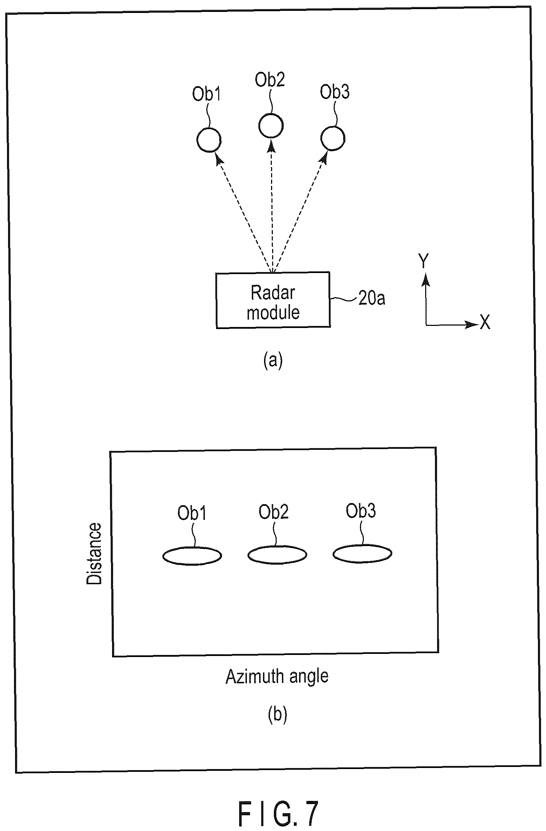

FIG. 7 is a diagram for explaining an example of image generation by the image generation units 22a to 22f according to the first embodiment. FIG. 7 (a) illustrates a state in which the radar module 20a receives reflected waves from three objects ob1, ob2, and ob3 having different positions in the X-direction. It is assumed that distances between the objects ob1, ob2, ob3 and the radar module 20a are equal to each other. As illustrated in FIG. 3, the radar module 20a includes the transmitting antennas Tx1 to Tx3 and the receiving antennas Rx1 to Rx4 that are one-dimensionally arranged on a straight line along the X-axis direction. Thus, it is possible to identify reflected waves from objects having different positions in the X-direction. The X-direction is also called an azimuth direction, and the position in the X-direction is called an azimuth angle. The Y-direction corresponding to the width of the passage 12 is also called a distance direction, and the position in the Y-direction is called a distance.

FIG. 7 (b) illustrates an example of an image generated by the image generation unit 22a based on the output signal of the radar module 20a in a case where the radar module 20a receives the reflected wave of the electromagnetic wave transmitted from any one of the radar modules 20a to 20f. The image is a two-dimensional image of an azimuth angle and a distance. FIG. 7 (b) illustrates an image including three objects ob1, ob2, and ob3 having different azimuth angles at the same distance. The image generation unit 22a generates a plurality of slice images shifted in a depth (distance) direction and a horizontal (azimuth) direction based on a received signal by the radar modules 20a to 20f.

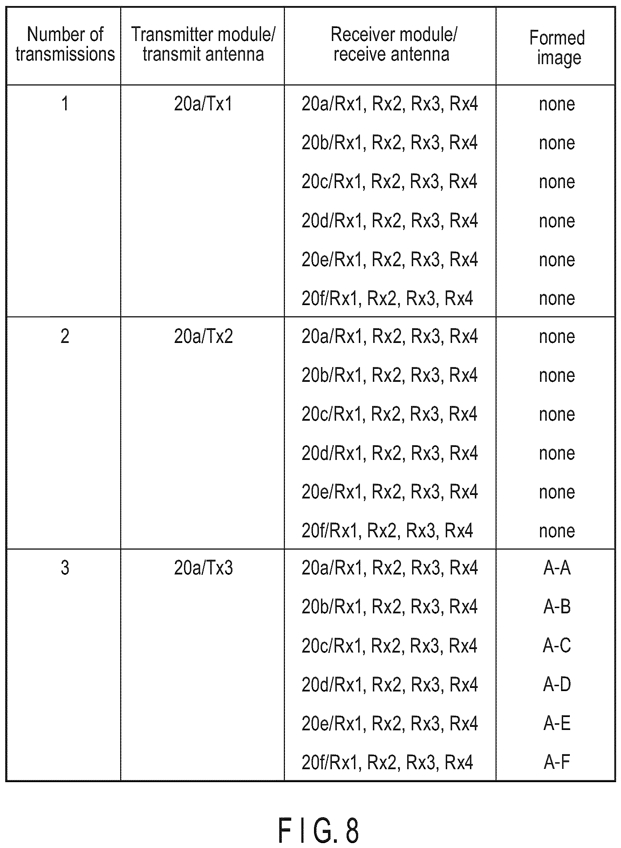

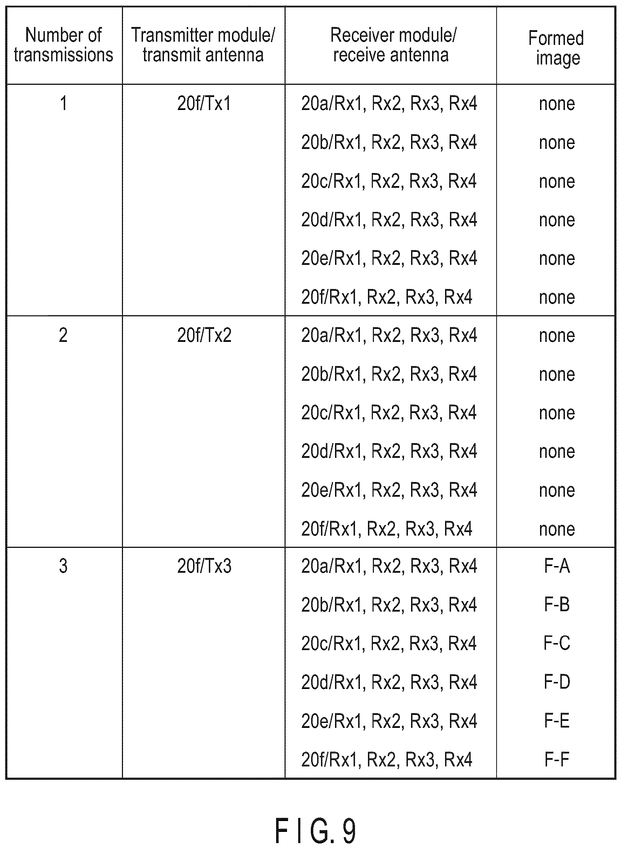

FIGS. 8 and 9 are diagrams for explaining an example of a transmitting/receiving operation of the radar modules 20a to 20f according to the first embodiment. Since the frequencies of the electromagnetic waves transmitted by the radar modules 20a to 20f are the same, the transmitting antennas Tx1 to Tx3 are driven in time division (TDM). When an electromagnetic wave is transmitted from one transmitting antenna of one radar module, and reflected wave is received by all receiving antennas of all radar modules 20a to 20f, one image is generated.

FIG. 8 illustrates an example of a transmitting/receiving operation of the radar modules 20a to 20f in a case where the radar module 20a is a transmitting module. When detecting that the pedestrian 10 is located in the inspection area based on the captured image of the camera 8, the irradiation scheduler 34 first causes one radar module, for example, the radar module 20a to sequentially transmit an electromagnetic wave three times.

In the first transmission for the radar module 20a, the irradiation scheduler 34 causes the radar module 20a to transmit an electromagnetic wave via the transmitting antenna Tx1. All the receiving antennas Rx1 to Rx4 of the radar modules 20a to 20f receive reflected waves substantially simultaneously. In the second transmission, the irradiation scheduler 34 causes the radar module 20a to transmit an electromagnetic wave via the transmitting antenna Tx2. All the receiving antennas Rx1 to Rx4 of the radar modules 20a to 20f receive reflected waves substantially simultaneously. In the third transmission, the irradiation scheduler 34 causes the radar module 20a to transmit an electromagnetic wave via the transmitting antenna Tx3. All the receiving antennas Rx1 to Rx4 of the radar modules 20a to 20f receive reflected waves substantially simultaneously.

When the third transmission of the radar module 20a completes, the image generation units 22a to 22f generate one image from each of the received signals of the radar modules 20a to 20f. An image based on a received signal corresponding to a combination of a transmitting module and receiving module in which the transmitting module is the radar module 20a and the reception module is the radar module 20a is called an A-A image. That is, when the third transmission completes, the image generation units 22a to 22f generate an A-A image, an A-B image, an A-C image, an A-D image, an A-E image, and an A-F image, respectively. The image generation units 22a to 22f supply the A-A image, the A-B image, the A-C image, the A-D image, the A-E image, and the A-F image to the image concatenating unit 24. The image concatenating unit 24 includes a first memory that stores images, and writes the six supplied images into the first memory.

Thereafter, the irradiation scheduler 34 causes each of the other radar modules 20b to 20f to transmit an electromagnetic wave three times.

FIG. 9 illustrates an example of the radar modules 20a to 20f in a case where the radar module 20f is a transmitting module. In the first transmission for the radar module 20f, the irradiation scheduler 34 causes the radar module 20f to transmit an electromagnetic wave via the transmitting antenna Tx1. All the receiving antennas Rx1 to Rx4 of the radar modules 20a to 20f receive reflected waves substantially simultaneously. In the second transmission, the irradiation scheduler 34 causes the radar module 20f to transmit an electromagnetic wave via the transmitting antenna Tx2. All the receiving antennas Rx1 to Rx4 of the radar modules 20a to 20f receive reflected waves substantially simultaneously. In the third transmission, the irradiation scheduler 34 causes the radar module 20f to transmit an electromagnetic wave via the transmitting antenna Tx3. All the receiving antennas Rx1 to Rx4 of the radar modules 20a to 20f receive reflected waves substantially simultaneously.

When the third transmission of the radar module 20f completes, the image generation units 22a to 22f generate an F-A image, an F-B image, an F-C image, an F-D image, an F-E image, and an F-F image from the received signals of the radar modules 20a to 20f. The image generation units 22a to 22f supply the F-A image, the F-B image, the F-C image, the F-D image, the F-E image, and the F-F image to the image concatenating unit 24. The image concatenating unit 24 writes the six supplied images into the first memory.

When the transmission from the radar modules 20a to 20f completes, the first memory of the image concatenating unit 24 stores thirty six images from the A-A image to the F-F image. The image concatenating unit 24 concatenates thirty six images to form one image. "Concatenating" means that thirty six images are arranged in different regions of one image.

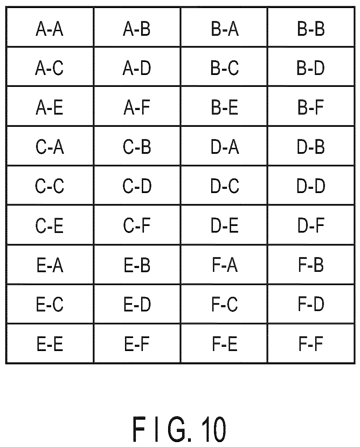

FIG. 10 is a diagram for illustrating an example of the concatenated image generated by the image concatenating unit 24 according to the first embodiment. The image concatenating unit 24 divides one area of the first memory for storing an image into, for example, 4×9 small regions. The image concatenating unit 24 writes six images generated in a case where the radar module 20a is the transmitting module, into the first memory such that the images are arranged in, for example, the upper left six small regions of one image. Similarly, the image concatenating unit 24 writes six images generated in a case where each of the other radar modules 20b to 20f is the transmitting module, into the first memory such that the images are arranged in predetermined six small regions of one image. For example, the image concatenating unit 24 writes six images generated in a case where the radar module 20f is the transmitting module, into the first memory such that the images are arranged in, for example, the lower right six small regions of one image. The image concatenating unit 24 supplies the concatenated image obtained by concatenating thirty six images to the determination unit 26.

The determination unit 26 learns a determination result of possession of a dangerous article by using a large number of concatenated images as teacher data. The teacher data is data related to the concatenated image of thirty six images for the pedestrian 10 located in the inspection area. The teacher data is independent of the position of the pedestrian 10 in the inspection area.

During a period in which the pedestrian 10 passes through the inspection area, the radar modules 20a to 20f can transmit an electromagnetic wave a plurality of times. During the period in which the pedestrian 10 passes through the inspection area, the image concatenating unit 24 can generate a plurality of concatenated images in which the positions of the pedestrian 10 in the inspection area are different from each other.

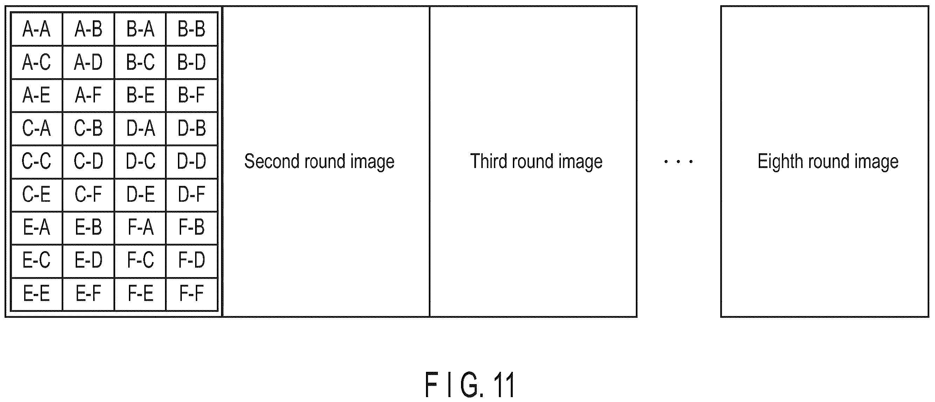

FIG. 11 illustrates a plurality of concatenated images generated by the image concatenating unit 24 when the pedestrian 10 passes through the inspection area. It is assumed that the radar modules 20a to 20f transmit an electromagnetic wave eight times during the period in which the pedestrian 10 passes through the inspection area. The concatenated image generated when the radar modules 20a to 20f transmit an electromagnetic wave first time is called a first round image. Thereafter, the concatenated images generated when the radar modules 20a to 20f transmit an electromagnetic wave second to eight times are called a second round image to an eighth round image. The image concatenating unit 24 generates an expanded concatenated image by concatenating the first to eighth round images.

The image concatenating unit 24 includes a second memory. The image concatenating unit 24 divides an area of the second memory for storing an image into, for example, 1×8 middle regions. The image concatenating unit 24 writes the first round image into the second memory such that the first round image is arranged in, for example, the middle region at the left end of one image. Similarly, the image concatenating unit 24 writes the second to eighth round images into the second memory such that the second to eighth round images are arranged in, for example, the second to eighth middle regions from the left end of one area. The image concatenating unit 24 supplies an expanded concatenated image obtained by concatenating eight concatenated images to each other, to the determination unit 26.

In a case where the determination unit 26 performs a dangerous article determination based on the expanded concatenated image, the determination unit 26 has learned the determination result of possession of the dangerous article by using a large number of the expanded concatenated images as teacher data. The positions of the eight concatenated images (included in the expanded concatenated image as the teacher data) in the inspection area are defined by boundaries for substantially equally dividing the inspection area into seven pieces in the X-direction.

The irradiation scheduler 34 calculates the walking speed of the pedestrian 10 based on the captured image of the camera 8. The irradiation scheduler 34 determines image capturing timings of the second to eighth round images from the walking speed and the length of the inspection area in the X-direction. The irradiation scheduler 34 causes the radar modules 20a to 20f to transmit an electromagnetic wave at the image capturing timings of the second to eighth round images, respectively. As a result, the image concatenating unit 24 can generate the concatenated image at the same position in the inspection area as the position of the teacher data in the inspection area.

The determination unit 26 can capture a change in the characteristics of the image of the pedestrian 10 for a long time by performing a dangerous article determination using the expanded concatenated image, and can perform more accurate dangerous article determination.

In the above description, since the irradiation scheduler 34 controls the transmission timings of the radar modules 20a to 20f, only the first to eighth round images are supplied to the image concatenating unit 24. However, the walking speed of the pedestrian 10 may fluctuate, and it may not be possible to obtain the timing when the inspection area is substantially equally divided into seven pieces in the X-direction. In such a case, the irradiation scheduler 34 may cause the radar modules 20a to 20f to transmit an electromagnetic wave at a constant period, and the image concatenating unit 24 may generate a large number of concatenated images which are equal to or more than 8. The image concatenating unit 24 may generate an expanded concatenated image by selecting eight concatenated images from a large number of concatenated images and concatenating the selected concatenated images.

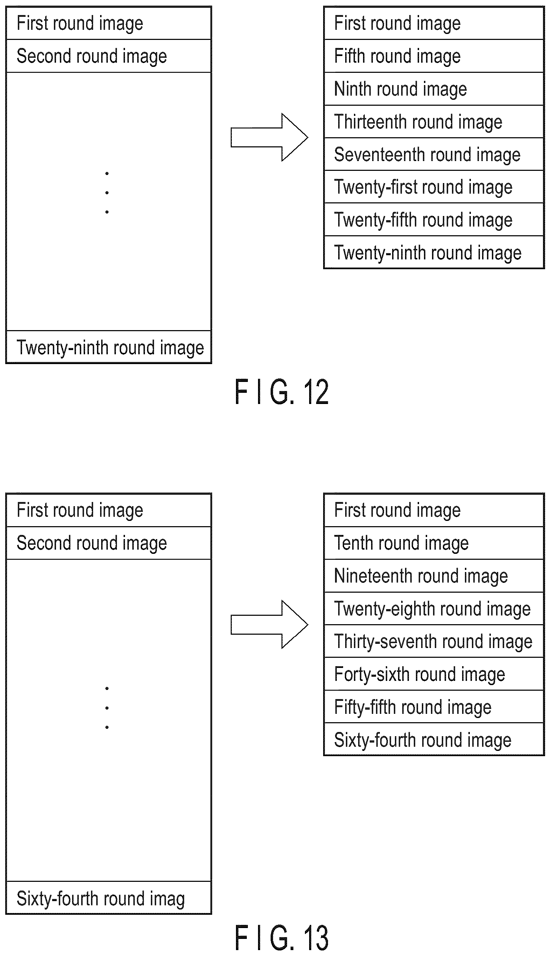

FIG. 12 illustrates an example of processing of the image concatenating unit 24 in a case where the irradiation scheduler 34 causes the radar modules 20a to 20f to transmit an electromagnetic wave at a constant period when the pedestrian 10 passes through the inspection area. It is assumed that the irradiation scheduler 34 transmits an electromagnetic wave twenty nine times during a period in which the pedestrian 10 passes through the inspection area. The image concatenating unit 24 generates twenty nine concatenated image, and selects 8 concatenated images at equal intervals among the twenty nine concatenated images: first round image, fifth round image, ninth round image, thirteenth round image, seventeenth round image, twenty-first round image, twenty-fifth round image, and twenty-ninth round image to obtain an expanded concatenated image.

FIG. 13 illustrates another example of the processing of the image concatenating unit 24 in a case where the irradiation scheduler 34 causes the radar modules 20a to 20f to transmit an electromagnetic wave at a constant period when the pedestrian 10 passes through the inspection area. In FIG. 13, it is assumed that the walking speed of the pedestrian 10 is lower than the walking speed in the case of FIG. 12. It is assumed that the irradiation scheduler 34 transmits an electromagnetic wave 64 times during a period in which the pedestrian 10 passes through the inspection area. The image concatenating unit 24 generates 64 concatenated image, and selects 8 concatenated images at equal intervals among the 64 concatenated images: first round image, tenth round image, nineteenth round image, 28th round image, 37th round image, 46th round image, 55th round image, and 64th round image to obtain an expanded concatenated image.

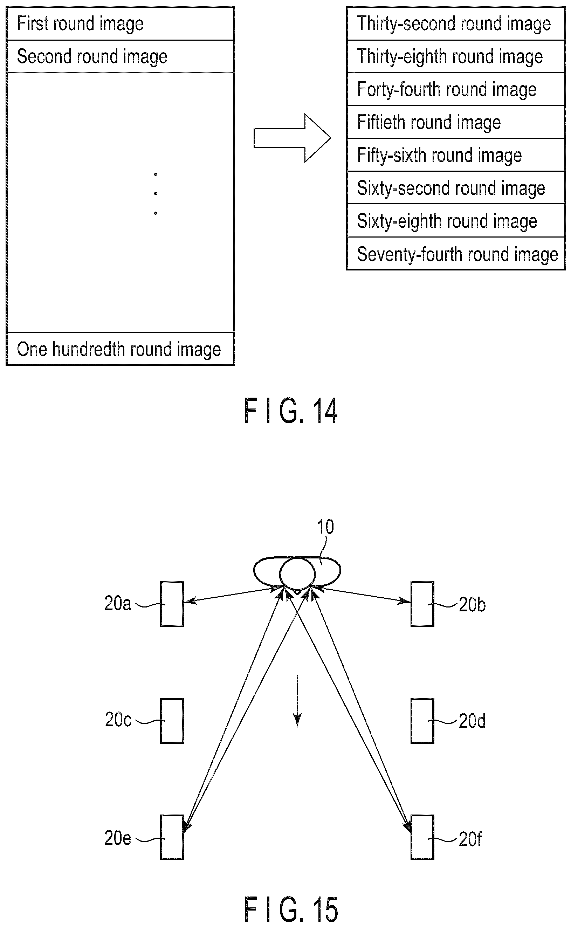

FIG. 14 illustrates still another example of the processing of the image concatenating unit 24 in a case where the irradiation scheduler 34 causes the radar modules 20a to 20f to transmit an electromagnetic wave at a constant period when the pedestrian 10 passes through the inspection area. In FIG. 14, it is assumed that the walking speed of the pedestrian 10 is further lower than the walking speed in the case of FIG. 13. It is assumed that the irradiation scheduler 34 causes an electromagnetic wave to be transmitted 100 times during a period in which the pedestrian 10 passes through the inspection area. The image concatenating unit 24 generates 100 concatenated images. Differing from the above examples, instead of selecting eight concatenated images at equal intervals from a large number of concatenated images, the image concatenating unit 24 may select eight concatenated images at equal intervals from concatenated images generated when the pedestrian 10 is located at the central portion (position facing the radar modules 20c and 20d) of the inspection area. The image concatenating unit 24 may select eight concatenated images at equal intervals among concatenated images from the 32nd round image to the 74th round image: 32nd round image, 38th round image, 44th round image, 50th round image, 56th round image, 62nd round image, 68th round image, and 74th round image to obtain an expanded concatenated image.

The expanded concatenated image includes concatenated images generated at different positions of the pedestrian 10 in the inspection area. Depending on the position of the pedestrian 10, any of the radar modules 20a to 20f may not be able to receive the reflected wave contributing to image creation, or may not be able to receive the reflected wave at all.

FIG. 15 illustrates an example of a case where some radar modules among the radar modules 20a to 20f are not able to receive the reflected wave contributing to image creation or is not able to receive the reflected wave at all. In FIG. 15, the pedestrian 10 is located in front of the position of the radar modules 20a and 20b in the traveling direction (X-direction). The radar module 20e (or 20a) hardly receives an electromagnetic wave transmitted from the radar module 20a (or 20e). The radar module 20f (or 20a) hardly receives an electromagnetic wave transmitted from the radar module 20a (or 20f). The radar module 20f (or 20b) hardly receives an electromagnetic wave transmitted from the radar module 20b (or 20f). The radar module 20e (or 20b) hardly receives an electromagnetic wave transmitted from the radar module 20b (or 20e).

Therefore, in a case where the irradiation scheduler 34 detects that the pedestrian 10 is located at the position illustrated in FIG. 15 based on the image from the camera 8, the irradiation scheduler 34 instructs the image concatenating unit 24 to remove, from the concatenation object, the eight images of the A-E image, the A-F image, the B-E image, the B-F image, the E-A image, the E-B image, the F-A image, and the F-B image based on the received signals corresponding to the combinations of the transmitting radar modules 20a to 20f and the receiving radar modules 20a to 20f in which the level of the received signal is smaller than a level contributing to the image generation, when the images generated by the image generation units 22a to 22f are concatenated. As a result, the image concatenating unit 24 concatenates images based on the received signals corresponding to the combinations of the transmitting radar modules 20a to 20f and the receiving radar modules 20a to 20f in which the level of the received signal is equal to or greater than the level contributing to image generation.

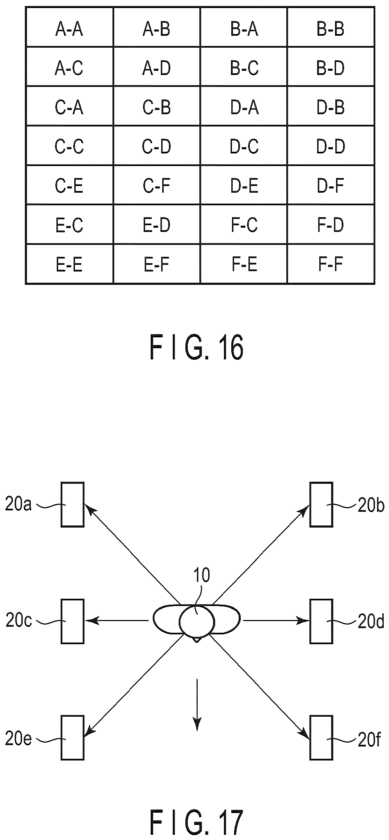

FIG. 16 illustrates an example of the concatenated images based on the received signals corresponding to combinations of the transmitting radar modules 20a to 20f and the receiving radar modules 20a to 20f in which the level of the received signal is expected to be equal to or greater than the level contributing to image generation, in a case where the pedestrian 10 is at the position illustrated in FIG. 15. The concatenated image includes an image based on 28 combinations of the transmitting radar modules 20a to 20f and the receiving radar modules 20a to 20f.

FIG. 17 illustrates another example of the case where some radar modules among the radar modules 20a to 20f are not able to receive a reflected wave contributing to image creation or is not able to receive any reflected wave. In FIG. 17, the position of the pedestrian 10 in the X-direction is the same as the positions of the radar modules 20c and 20d in the X-direction. Since being blocked by the pedestrian 10, the radar module 20a (or 20f) hardly receives an electromagnetic wave transmitted from the radar module 20f (or 20a), the radar module 20c (or 20d) hardly receives an electromagnetic wave transmitted from the radar module 20d (or 20c), and the radar module 20e (or 20f) hardly receives an electromagnetic wave transmitted from the radar module 20f (or 20e).

Therefore, in a case where the irradiation scheduler 34 detects that the pedestrian 10 is located at the position illustrated in FIG. 17 based on the image from the camera 8, the irradiation scheduler 34 instructs the image concatenating unit 24 to remove, from the concatenation object, the six images of the A-F image, the B-E image, the C-D image, the D-C image, the E-B image, and the F-A image based on the received signals corresponding to the combinations of the transmitting radar modules 20a to 20f and the receiving radar modules 20a to 20f in which the level of the received signal is expected to be smaller than a level contributing to the image generation, when the images generated by the image generation units 22a to 22f are concatenated. As a result, the image concatenating unit 24 concatenates images based on the received signals corresponding to the combinations of the transmitting radar modules 20a to 20f and the receiving radar modules 20a to 20f in which the level of the received signal is expected to be equal to or greater than the level contributing to image generation.

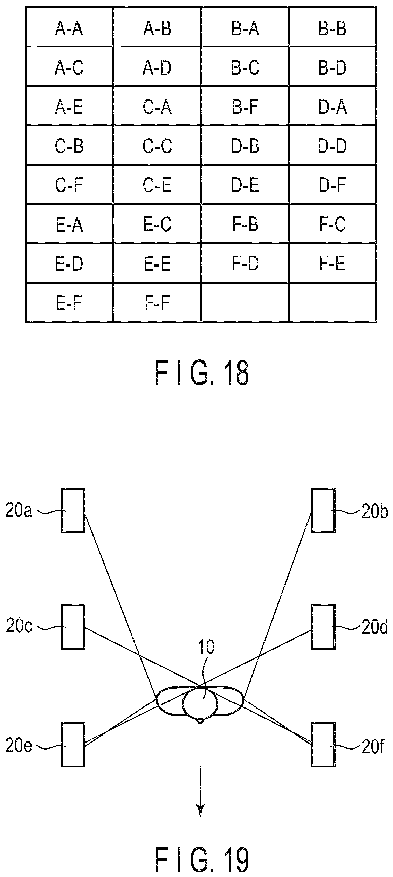

FIG. 18 illustrates an example of concatenated images based on received signals corresponding to combinations of the transmitting radar modules 20a to 20f and the receiving radar modules 20a to 20f in which the level of the received signal is expected to be equal to or greater than the level contributing to image generation, in a case where the pedestrian 10 is at the position illustrated in FIG. 17. The concatenated image includes images based on 30 combinations of the transmitting radar modules 20a to 20f and the receiving radar modules 20a to 20f.

FIG. 19 illustrates another example of the case where some radar modules are not able to receive the reflected wave contributing to image creation or is not able to receive the reflected wave at all. In FIG. 19, the position of the pedestrian 10 in the X-direction is an intermediate position between the radar modules 20c and 20e (or the radar modules 20d and 20f). The radar module 20a (or 20e) hardly receives an electromagnetic wave transmitted from the radar module 20e (or 20a). The radar module 20b (or 20f) hardly receives an electromagnetic wave transmitted from the radar module 20f (or 20b). The radar module 20c (or 20f) hardly receives an electromagnetic wave transmitted from the radar module 20f (or 20c), and the radar module 20d (or 20e) hardly receives an electromagnetic wave transmitted from the radar module 20e (or 20d).

Therefore, in a case where the irradiation scheduler 34 detects that the pedestrian 10 is located at the position illustrated in FIG. 19 based on the image from the camera 8, the irradiation scheduler 34 instructs the image concatenating unit 24 to remove, from the concatenation object, the eight images of the A-E image, the B-F image, the C-F image, the D-E image, the E-A image, the F-B image, the F-C image, and the E-D image based on the received signals corresponding to the combinations of the transmitting radar modules 20a to 20f and the receiving radar modules 20a to 20f in which the level of the received signal is expected to be smaller than a level contributing to the image generation, when the images generated by the image generation units 22a to 22f are concatenated. As a result, the image concatenating unit 24 concatenates images based on the received signals corresponding to the combinations of the transmitting radar modules 20a to 20f and the receiving radar modules 20a to 20f in which the level of the received signal is expected to be equal to or greater than the level contributing to image generation.

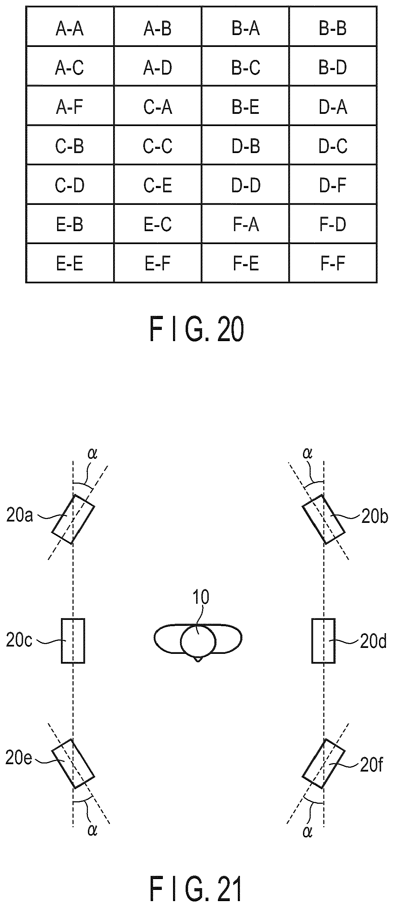

FIG. 20 illustrates an example of concatenated images based on received signals corresponding to combinations of the transmitting radar modules 20a to 20f and the receiving radar modules 20a to 20f in which the level of the received signal is expected to be equal to or greater than the level contributing to image generation, in a case where the pedestrian 10 is at the position illustrated in FIG. 19. The concatenated image includes images based on 28 combinations of the transmitting radar modules 20a to 20f and the receiving radar modules 20a to 20f.

FIG. 21 is a diagram for illustrating another example of the arrangement of the radar modules in the processing system according to the first embodiment. In FIG. 21, the position of the pedestrian 10 in the X-direction is the same as the positions of the radar modules 20c and 20d in the X-direction. In the above description, the radar modules 20a, 20c, and 20e are arranged on the side wall 16 (flat surface), and the radar modules 20b, 20d, and 20f are arranged on the side wall 14 (flat surface). Therefore, as illustrated in FIG. 15 or 19, the radar modules 20a, 20b, 20e, and 20f located at the end portion of the inspection area have a narrow range in which the reflected wave can be received.

In FIG. 21, the radar modules 20a and 20b are inclined by $\alpha$ degrees with respect to the transmitting and receiving surfaces of the radar modules 20c and 20d such that the transmitting and receiving surfaces of the radar modules 20a and 20b face the position of the pedestrian 10 at the center of the inspection area. The radar modules 20e and 20f are inclined by $\alpha$ degrees with respect to the transmitting and receiving surfaces of the radar modules 20c and 20d such that the transmitting and receiving surfaces of the radar modules 20e and 20f face the position of the pedestrian 10 at the center of the inspection area. Thus, the range in which the reflected wave can be received by the radar modules 20a, 20b, 20e, and 20f is wider than the range in the case illustrated in FIG. 1. As a result, the number of combinations of the transmitting radar modules 20a to 20f and the receiving radar modules 20a to 20f in which the level of the received signal is expected to be smaller than the level contributing to image generation is reduced, and the number of images removed from the concatenation object is reduced even when the pedestrian 10 is located at the position illustrated in FIG. 15, 17, or 19.

When a plurality of images based on the received signals of the radar modules 20a to 20f are concatenated to form one image, alignment of pixels is not necessary. Thus, the transmitting/receiving direction of the radar modules 20a to 20f can be changed. In a case where a plurality of images is superposed to form one image, alignment of pixels is necessary. Thus, it is not possible to freely change the transmitting/receiving direction of the radar modules 20a to 20f.

According to the first embodiment, a plurality of images based on received signals corresponding to combinations each formed by one transmitting antenna among a plurality of transmitting antennas included in at least two radar modules and one receiving antenna among a plurality of receiving antennas included in at least two radar modules are concatenated to form one concatenated image. It is determined whether or not there is an object, based on the concatenated image. Therefore, a processing system capable of determining whether or not there is an object in a short time at low cost is provided.

A plurality of concatenated images generated at different times may be concatenated to generate the expanded concatenated image. When the determination is made based on the expanded concatenated image, it is more accurately determined whether or not there is an object.

Depending on the position of the object, there is a combination of the transmitting antenna and the receiving antenna that do not contribute to image generation. An image based on a received signal corresponding to such a combination is removed from the concatenation object. Since the concatenated image does not include an image that does not contribute for object determination, the size of the concatenated image is suppressed to the minimum necessary.

When images based on the received signals of the radar modules 20a to 20f are concatenated to form one image, alignment of pixels is not necessary. Thus, the transmitting/receiving direction of the radar modules 20a to 20f can be freely changed. Therefore, it is possible to reduce the number of combinations of transmitting antennas and receiving antennas that do not contribute to image generation.


Second Embodiment

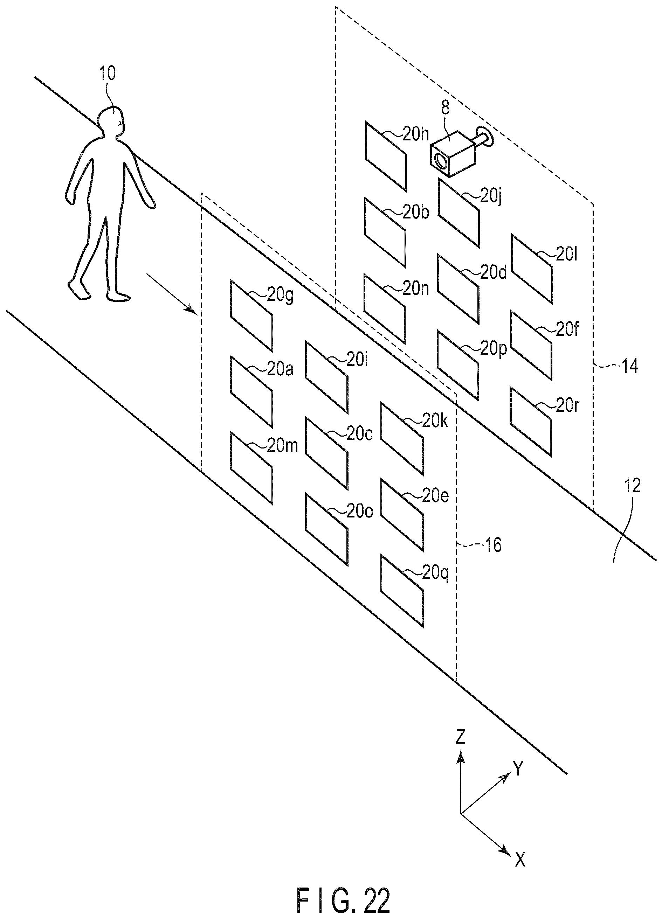

FIG. 22 is a diagram for illustrating an outline of a processing system according to a second embodiment. In the second embodiment, radar modules are added to the processing system in the first embodiment. In the first embodiment, the radar modules arranged on each side wall are one-dimensionally arranged. As illustrated in FIG. 7, the processing system generates a two-dimensional image of an azimuth angle and a distance.

In the second embodiment, nine radar modules 20a, 20c, 20e, 20g, 20i, 20k, 20m, 20o, and 20q are two-dimensionally arranged on the side wall 16. Nine radar modules 20b, 20d, 20f, 20h, 20j, 20l, 20n, 20p, and 20r are two-dimensionally arranged on the side wall 14. Each of the radar modules 20a to 20r includes three transmitting antennas Tx1 to Tx3 and four receiving antennas Rx1 to Rx4 which are arranged one-dimensionally in an X-direction, as illustrated in FIG. 2.

An example of an electrical configuration of the processing system according to the second embodiment is similar to the electrical configuration in FIG. 3, and thus illustration thereof is omitted. That is, the eighteen radar modules 20a to 20r are connected to eighteen image generation units 22 (similar configuration to the image generation units 22a to 22f illustrated in FIG. 3), respectively. The image generation unit 22 creates a plurality of slice images shifted in a depth direction (distance direction) and a horizontal direction (azimuth angle direction) based on received signals of the two-dimensionally arranged radar modules 20a to 20r.

Note that, in a case where the receiving antennas and the transmitting antennas are two-dimensionally arranged in each of the radar modules 20a to 20r, the image generation unit 22 can generate a plurality of three-dimensional slice images shifted in the depth direction, the horizontal direction, and a vertical direction (elevation angle direction), based on the received signals of the two-dimensionally arranged radar modules 20a to 20r. The elevation angle corresponds to a Z-direction. The depth direction is a direction perpendicular to the vertical direction and the horizontal direction. The image generation unit 22 may acquire not only the slice images related to the azimuth angle, the elevation angle, and the distance but also a slice image related to speed information by signal processing in the Doppler (speed) dimension.

Outputs of the eighteen image generation units 22 are connected to the image concatenating unit 24. The image concatenating unit 24 concatenates the output images of the eighteen image generation units 22 to generate one concatenated image. In a case where the receiving antennas and the transmitting antennas are one-dimensionally arranged in each of the radar modules 20a to 20r, the image concatenating unit 24 can generate a distance-azimuth (elevation) angle map. In a case where the receiving antennas and the transmitting antennas are two-dimensionally arranged in each of the radar modules 20a to 20r, the image concatenating unit 24 can generate a distance-elevation angle map and an azimuth angle-elevation angle map in addition to the distance-azimuth angle map. Furthermore, in a case where a slice image related to speed information is acquired, a map in which an azimuth angle, an elevation angle, a distance, and a speed are associated with each other can also be generated.

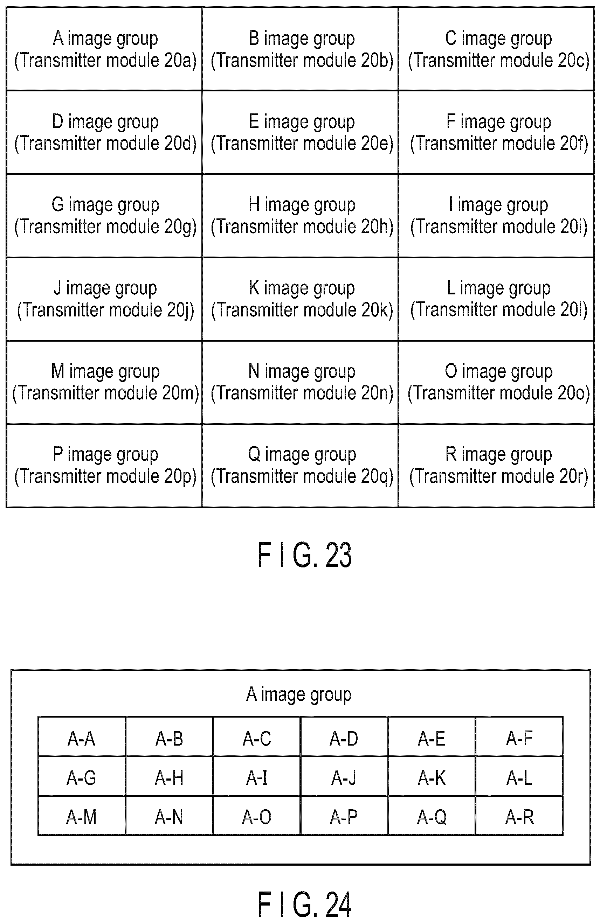

FIG. 23 is a diagram for illustrating an example of the concatenated image generated by the image concatenating unit 24 according to the second embodiment. Similarly to the first embodiment, each of the radar modules 20a to 20r causes an electromagnetic wave to be sequentially transmitted via the three transmitting antennas. An electromagnetic wave is transmitted from the transmitting antenna Tx1 of the radar module 20a, and a reflected wave is received by the receiving antennas Rx1 to Rx4 of the radar modules 20a to 20r. When an electromagnetic wave is transmitted from all the transmitting antennas Tx1 to Tx3 of the radar module 20a and a reflected wave is received by the receiving antennas Rx1 to Rx4 of the radar modules 20a to 20r, the image generation unit 22 generates eighteen images including A-A image to A-R image, and supplies the A-A image to the A-R image to the image concatenating unit 24. The A-A image to the A-R image generated in a case where the radar module 20a is a transmitting module is called an A image group.

The image concatenating unit 24 includes a third memory. The image concatenating unit 24 divides one area of the third memory for storing an image into, for example, 3×6 (=18) middle regions in accordance with the number of the radar modules 20a to 20r. The image concatenating unit 24 writes the A image group generated in a case where the radar module 20a is the transmitting module, into the third memory such that the A image group is arranged in, for example, the upper left middle region of one image. Similarly, the image concatenating unit 24 writes eighteen images generated in a case where the other radar modules 20b to 20f are the transmitting module, into the third memory such that the images are arranged in predetermined middle region of one image. For example, the image concatenating unit 24 writes an R image group generated in a case where the radar module 20r is the transmitting module, into the third memory such that the R image group is arranged in, for example, the lower right middle region of one image.

FIG. 24 is a diagram for illustrating one image group among concatenated images generated by the image concatenating unit 24 according to the second embodiment. Here, the A image group is illustrated. The same applies to other image groups. The image concatenating unit 24 divides one middle region of one image on the third memory into, for example, 6×3 small regions. The image concatenating unit 24 writes eighteen images (A-A image to A-R image) generated in a case where the radar module 20a is the transmitting module, into the third memory such that the images are arranged in, for example, eighteen small regions included in the upper left middle region of one image.

According to the second embodiment, a plurality of three-dimensional images based on received signals corresponding to combinations each formed by one transmitting antenna among a plurality of transmitting antennas included in at least two radar modules two-dimensionally arranged and one receiving antenna among a plurality of receiving antennas included in at least two radar modules are concatenated to form one concatenated image. It is determined whether or not there is an object, based on the concatenated image. Therefore, a processing system capable of determining whether or not there is an object in a short time at low cost is provided.

Also in the second embodiment, as described in relation to the first embodiment with reference to FIGS. 11 to 20, a plurality of concatenated images generated at different times may be concatenated to form an expanded concatenated image.

Furthermore, also in the second embodiment, as described in relation to the first embodiment with reference to FIG. 21, regarding the transmitting/receiving directions of the radar modules arranged in the periphery, the transmitting and receiving surfaces may be directed toward the center of the inspection area.

In a case where a plurality of images is concatenated to form one image, alignment of pixels is necessary. Thus, it is not possible to freely change the direction of the radar modules 20a to 20f. In order to align pixels of a three-dimensional image, it is necessary to align resolutions of an azimuth, an elevation angle, and a distance of the three-dimensional image. In this case, it is not possible to freely set the directions of the radar modules 20a to 20f.

While certain embodiments have been described, these embodiments have been presented by way of example only, and are not intended to limit the scope of the inventions. Indeed, the novel embodiments described herein may be embodied in a variety of other forms; furthermore, various omissions, substitutions, and changes in the form of the embodiments described herein may be made without departing from the spirit of the inventions. The accompanying claims and their equivalents are intended to cover such forms or modifications as would fall within the scope and spirit of the inventions.

Reference Signs List

8...camera, 20a to 20f...radar module, 22a to 22f...image generating unit, 24... image concatenating unit, 26...determination unit, 28...display unit, 32...reference signal generation unit, 34...irradiation scheduler

**Claims**

1. A processing system comprising:

    a concatenating unit configured to form a concatenated image by concatenating m images based on received signals acquired by two or more radars; and
    a determination unit configured to determine whether or not there is an object, based on the concatenated image, wherein
    m is an integer equal to or more than 2.

2. The processing system according to claim 1, wherein the concatenating unit is configured to arrange the m images in different regions of the concatenated image.

3. The processing system according to claim 1, wherein each of the m images is based on each of received signals corresponding to m combinations of a transmitting circuit among transmitting circuits included in the two or more radars and a reception circuit among reception circuits included in the two or more radars.

4. The processing system according to claim 1, wherein

    each of the m images is based on each of received signals corresponding to m combinations of a transmitting circuit among transmitting circuits included in the two or more radars and a reception circuit among reception circuits included in the two or more radars, among n combinations of a transmitting circuit among the transmitting circuits included in the two or more radars and a reception circuit among the reception circuits included in the two or more radars, and
    n is an integer equal to or more than m.

5. The processing system according to claim 4, wherein

    levels of received signals corresponding to the n combinations comprise a first level equal to or higher than a predetermined level and a second level lower than the predetermined level, and
    levels of the received signals corresponding to the m combinations comprise the second level.

6. The processing system according to claim 1, wherein

    the concatenating unit generates the image by concatenating $m_1$ images based on received signals acquired by the two or more radars at a first timing and $m_2$ images based on received signals acquired by the two or more radars at a second timing different from the first timing, and
    $m_1$ and $m_2$ are integers equal to or more than 2.

7. The processing system according to claim 6, wherein

    the $m_1$ images are based on received signals corresponding to $m_1$ combinations of a transmitting circuit among transmitting circuits included in the two or more radars and a reception circuit among reception circuits included in the two or more radars,
    the $m_2$ images are based on received signals corresponding to $m_2$ combinations of a transmitting circuit among the transmitting circuits included in the two or more radars and a reception unit among the reception circuits included in the two or more radars, and
    $m_1$ and $m_2$ are different from one another.

8. The processing system according to claim 7, wherein

    each of the $m_1$ images is based on each of received signals corresponding to $m_1$ combinations of a transmitting circuit among the transmitting circuits included in the two or more radars and a reception circuit among the reception circuits included in the two or more radars, among $n_1$ combinations of a transmitting circuit among the transmitting circuits included in the two or more radars and a reception circuit among the reception circuits included in the two or more radars,
    each of the $m_2$ images is based on each of received signals corresponding to $m_2$ combinations of a transmitting circuit among the transmitting circuits included in the two or more radars and a reception circuit among the reception circuits included in the two or more radars, among ng combinations of a transmitting circuit among the transmitting circuits included in the two or more radars and a reception circuit among the reception circuits included in the two or more radars,
    $n_1$ is an integer equal to or more than $m_1$, and
    $n_2$ is an integer equal to or more than $m_2$.

9. The processing system according to claim 8, wherein

    levels of received signals corresponding to the $n_1$ combinations comprise a first level equal to or higher than a predetermined level and a second level lower than the predetermined level,
    levels of received signals corresponding to the $m_1$ combinations comprise the second level,
    levels of received signals corresponding to the $n_2$ combinations comprise the first level and the second level, and
    levels of received signals corresponding to the $m_2$ combinations comprise the second level.

**10.** The processing system according to claim 1, wherein

the concatenating unit is configured to generate the image by concatenating the m images based on received signals acquired by the two or more radars at p timings among images based on received signals acquired by the two or more radars at o timings,
p is an integer equal to or more than 2, and
o is an integer equal to or more than p.

**11.** The processing system according to claim 10, wherein

received signals acquired at o timings are received signals corresponding to combinations each formed by a transmitting circuit among transmitting circuits included in the two or more radars and a reception circuit among reception circuits included in the two or more radars,
received signals acquired at a first timing among p timings are received signals corresponding to $m_1$ combinations each formed by a transmitting circuit among transmitting circuits included in the two or more radars and a reception circuit among reception circuits included in the two or more radars,
received signals acquired at a second timing different from the first timing among p timings are received signals corresponding to $m_2$ combinations each formed by a transmitting circuit among transmitting circuits included in the two or more radars and a reception circuit among reception circuits included in the two or more radars, and
$m_1$ and $m_2$ are integers equal to or more than 2.

**12.** The processing system according to claim 11, wherein

levels of received signals acquired at o timings comprises a first level equal to or higher than a predetermined level and a second level lower than the predetermined level,
levels of received signals corresponding to $m_1$ combinations are the second level, and
levels of received signals corresponding to $m_2$ combinations are the second level.

**13.** The processing system according to claim 1, further comprises the two or more radars.

**14.** The processing system according to claim 13, wherein the two or more radars are synchronized by a signal from a reference signal generation unit.

**15.** The processing system according to claim 1, wherein the object comprises metal or powder.

**16.** A processing method comprising:

forming a concatenated image by concatenating m images based on received signals acquired by two or more radars; and
determining whether or not there is an object, based on the generated image, wherein
m is an integer equal to or more than 2.

**17.** A program causing a computer to perform as

a forming unit configured to form a concatenated image by concatenating m images based on received signals acquired by two or more radars; and
a determination unit configured to determine whether or not there is an object, based on the concatenated image, wherein
m is an integer equal to or more than 2.

F I G. 1

F I G. 2

EP 4 495 627 A1

FIG. 3

FIG. 4

(a)

(b)

FIG.5

(a) Frequency / Time — Transmitted signal, Received signals

(b) Frequency / Time — IF signals

FFT

(c) Reflection intensity / Frequency(Distance from radar)

F I G. 6

Ob1    Ob2    Ob3

Radar module    ~20a

Y
X

(a)

Distance

Ob1    Ob2    Ob3

Azimuth angle

(b)

F I G. 7

| Number of transmissions | Transmitter module/ transmit antenna | Receiver module/ receive antenna | Formed image |
|---|---|---|---|
| 1 | 20a/Tx1 | 20a/Rx1, Rx2, Rx3, Rx4 | none |
| | | 20b/Rx1, Rx2, Rx3, Rx4 | none |
| | | 20c/Rx1, Rx2, Rx3, Rx4 | none |
| | | 20d/Rx1, Rx2, Rx3, Rx4 | none |
| | | 20e/Rx1, Rx2, Rx3, Rx4 | none |
| | | 20f/Rx1, Rx2, Rx3, Rx4 | none |
| 2 | 20a/Tx2 | 20a/Rx1, Rx2, Rx3, Rx4 | none |
| | | 20b/Rx1, Rx2, Rx3, Rx4 | none |
| | | 20c/Rx1, Rx2, Rx3, Rx4 | none |
| | | 20d/Rx1, Rx2, Rx3, Rx4 | none |
| | | 20e/Rx1, Rx2, Rx3, Rx4 | none |
| | | 20f/Rx1, Rx2, Rx3, Rx4 | none |
| 3 | 20a/Tx3 | 20a/Rx1, Rx2, Rx3, Rx4 | A-A |
| | | 20b/Rx1, Rx2, Rx3, Rx4 | A-B |
| | | 20c/Rx1, Rx2, Rx3, Rx4 | A-C |
| | | 20d/Rx1, Rx2, Rx3, Rx4 | A-D |
| | | 20e/Rx1, Rx2, Rx3, Rx4 | A-E |
| | | 20f/Rx1, Rx2, Rx3, Rx4 | A-F |

FIG. 8

| Number of transmissions | Transmitter module/ transmit antenna | Receiver module/ receive antenna | Formed image |
|---|---|---|---|
| 1 | 20f/Tx1 | 20a/Rx1, Rx2, Rx3, Rx4 | none |
| | | 20b/Rx1, Rx2, Rx3, Rx4 | none |
| | | 20c/Rx1, Rx2, Rx3, Rx4 | none |
| | | 20d/Rx1, Rx2, Rx3, Rx4 | none |
| | | 20e/Rx1, Rx2, Rx3, Rx4 | none |
| | | 20f/Rx1, Rx2, Rx3, Rx4 | none |
| 2 | 20f/Tx2 | 20a/Rx1, Rx2, Rx3, Rx4 | none |
| | | 20b/Rx1, Rx2, Rx3, Rx4 | none |
| | | 20c/Rx1, Rx2, Rx3, Rx4 | none |
| | | 20d/Rx1, Rx2, Rx3, Rx4 | none |
| | | 20e/Rx1, Rx2, Rx3, Rx4 | none |
| | | 20f/Rx1, Rx2, Rx3, Rx4 | none |
| 3 | 20f/Tx3 | 20a/Rx1, Rx2, Rx3, Rx4 | F-A |
| | | 20b/Rx1, Rx2, Rx3, Rx4 | F-B |
| | | 20c/Rx1, Rx2, Rx3, Rx4 | F-C |
| | | 20d/Rx1, Rx2, Rx3, Rx4 | F-D |
| | | 20e/Rx1, Rx2, Rx3, Rx4 | F-E |
| | | 20f/Rx1, Rx2, Rx3, Rx4 | F-F |

F I G. 9

| A-A | A-B | B-A | B-B |
|-----|-----|-----|-----|
| A-C | A-D | B-C | B-D |
| A-E | A-F | B-E | B-F |
| C-A | C-B | D-A | D-B |
| C-C | C-D | D-C | D-D |
| C-E | C-F | D-E | D-F |
| E-A | E-B | F-A | F-B |
| E-C | E-D | F-C | F-D |
| E-E | E-F | F-E | F-F |

F I G. 10

| | | | |
|---|---|---|---|
| A-A | A-B | B-A | B-B |
| A-C | A-D | B-C | B-D |
| A-E | A-F | B-E | B-F |
| C-A | C-B | D-A | D-B |
| C-C | C-D | D-C | D-D |
| C-E | C-F | D-E | D-F |
| E-A | E-B | F-A | F-B |
| E-C | E-D | F-C | F-D |
| E-E | E-F | F-E | F-F |

Second round image

Third round image

· · ·

Eighth round image

FIG. 11

| First round image |
| Second round image |
| . . . |
| Twenty-ninth round image |

⇒

| First round image |
| Fifth round image |
| Ninth round image |
| Thirteenth round image |
| Seventeenth round image |
| Twenty-first round image |
| Twenty-fifth round image |
| Twenty-ninth round image |

F I G. 12

| First round image |
| Second round image |
| . . . |
| Sixty-fourth round imag |

⇒

| First round image |
| Tenth round image |
| Nineteenth round image |
| Twenty-eighth round image |
| Thirty-seventh round image |
| Forty-sixth round image |
| Fifty-fifth round image |
| Sixty-fourth round image |

F I G. 13

| First round image |
|---|
| Second round image |
| . |
| . |
| . |
| One hundredth round image |

⟹

| Thirty-second round image |
|---|
| Thirty-eighth round image |
| Forty-fourth round image |
| Fiftieth round image |
| Fifty-sixth round image |
| Sixty-second round image |
| Sixty-eighth round image |
| Seventy-fourth round image |

F I G. 14

F I G. 15

| A-A | A-B | B-A | B-B |
| --- | --- | --- | --- |
| A-C | A-D | B-C | B-D |
| C-A | C-B | D-A | D-B |
| C-C | C-D | D-C | D-D |
| C-E | C-F | D-E | D-F |
| E-C | E-D | F-C | F-D |
| E-E | E-F | F-E | F-F |

FIG. 16

FIG. 17

| A-A | A-B | B-A | B-B |
|-----|-----|-----|-----|
| A-C | A-D | B-C | B-D |
| A-E | C-A | B-F | D-A |
| C-B | C-C | D-B | D-D |
| C-F | C-E | D-E | D-F |
| E-A | E-C | F-B | F-C |
| E-D | E-E | F-D | F-E |
| E-F | F-F |     |     |

FIG. 18

FIG. 19

| A-A | A-B | B-A | B-B |
|-----|-----|-----|-----|
| A-C | A-D | B-C | B-D |
| A-F | C-A | B-E | D-A |
| C-B | C-C | D-B | D-C |
| C-D | C-E | D-D | D-F |
| E-B | E-C | F-A | F-D |
| E-E | E-F | F-E | F-F |

## F I G. 20

## F I G. 21

F I G. 22

| A image group (Transmitter module 20a) | B image group (Transmitter module 20b) | C image group (Transmitter module 20c) |
|---|---|---|
| D image group (Transmitter module 20d) | E image group (Transmitter module 20e) | F image group (Transmitter module 20f) |
| G image group (Transmitter module 20g) | H image group (Transmitter module 20h) | I image group (Transmitter module 20i) |
| J image group (Transmitter module 20j) | K image group (Transmitter module 20k) | L image group (Transmitter module 20l) |
| M image group (Transmitter module 20m) | N image group (Transmitter module 20n) | O image group (Transmitter module 20o) |
| P image group (Transmitter module 20p) | Q image group (Transmitter module 20q) | R image group (Transmitter module 20r) |

F I G. 23

| A image group | | | | | |
|---|---|---|---|---|---|
| A-A | A-B | A-C | A-D | A-E | A-F |
| A-G | A-H | A-I | A-J | A-K | A-L |
| A-M | A-N | A-O | A-P | A-Q | A-R |

F I G. 24

## INTERNATIONAL SEARCH REPORT

| International application No. |
|---|
| **PCT/JP2022/030739** |

**A. CLASSIFICATION OF SUBJECT MATTER**

*G01S 13/90*(2006.01)i; *G01S 13/89*(2006.01)i
FI: G01S13/90 191; G01S13/89

According to International Patent Classification (IPC) or to both national classification and IPC

**B. FIELDS SEARCHED**

Minimum documentation searched (classification system followed by classification symbols)

G01S7/00-7/42; G01S13/00-13/95

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2017-223575 A (NIPPON SIGNAL CO LTD) 21 December 2017 (2017-12-21) paragraphs [0021], [0045], [0052], [0053], [0055], [0078] | 1-2,13-17 |
| A | | 3-12 |
| Y | JP 2007-517275 A (BATTELLE MEMORIAL INSTITUTE) 28 June 2007 (2007-06-28) paragraph [0009] | 1-2, 13-17 |
| A | | 3-12 |
| Y | JP 2019-207123 A (SANEI GEN FFI INC) 05 December 2019 (2019-12-05) paragraph [0034], [0041] | 1-2, 13-17 |
| A | | 3-12 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **14 October 2022** | **25 October 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/030739**

| Patent document cited in search report | | | Publication date (day/month/year) | Patent family member(s) | Publication date (day/month/year) |
|---|---|---|---|---|---|
| JP | 2017-223575 | A | 21 December 2017 | (Family: none) | |
| JP | 2007-517275 | A | 28 June 2007 | US 2004/0090359 A1 paragraph [0029] | |
| JP | 2019-207123 | A | 05 December 2019 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BORJA GONZALEZ-VALDES et al.** Millimeter Wave Imaging Architecture for On-The-Move Whole Body Imaging. *IEEE TRANSACTIONS ON ANTENNAS AND PROPAGATION*, June 2016, vol. 64 (6)